Europäisches Patentamt

European Patent Office

Office européen des brevets

(11) Veröffentlichungsnummer: **0 344 551 B1**

## (12) EUROPÄISCHE PATENTSCHRIFT

(45) Veröffentlichungstag der Patentschrift: **25.11.92**

(21) Anmeldenummer: **89109105.0**

(22) Anmeldetag: **20.05.89**

Die Akte enthält technische Angaben, die nach
dem Eingang der Anmeldung eingereicht wurden
und die nicht in dieser Patentschrift enthalten sind.

(51) Int. Cl.⁵: **C08G 18/10**, C08G 18/48,
C08G 18/76

(54) **Flüssige Polyisocyanatmischungen, ein Verfahren zu ihrer Herstellung und ihre Verwendung zur Herstellung von Polyurethan-Weichschaumstoffen.**

(30) Priorität: **02.06.88 DE 3818769**

(43) Veröffentlichungstag der Anmeldung:
**06.12.89 Patentblatt 89/49**

(45) Bekanntmachung des Hinweises auf die
Patenterteilung:
**25.11.92 Patentblatt 92/48**

(84) Benannte Vertragsstaaten:
**AT BE CH DE ES FR GB IT LI NL SE**

(56) Entgegenhaltungen:
**EP-A- 0 111 121**
**GB-A- 947 483**
**US-A- 3 737 391**

**CHEMICAL ABSTRACTS, Band 108, Nr. 20,
Mai 1988, Seite 56, Zusammenfassung Nr.
168756y, Columbus, Ohio, US; & JP-A-62 184
008 (DAIICHI) 12-08-1987**

(73) Patentinhaber: **BAYER AG**

**W-5090 Leverkusen 1 Bayerwerk(DE)**

(72) Erfinder: **Gansen, Peter. Dr.**
**Roggendorfstrasse 57**
**W-5000 Köln 80(DE)**
Erfinder: **Wolf, Klaus-Dieter, Dr.**
**Andreas-Gryphius-Strasse 22**
**W-5000 Köln 80(DE)**
Erfinder: **Seel, Klaus, Dr.**
**Märchenstrasse 72**
**W-5000 Köln 80(DE)**

EP 0 344 551 B1

**Beschreibung**

Die Erfindung betrifft neue, flüssige, Urethangruppen enthaltende Polyisocyanatmischungen auf Basis von Polyisocyanaten oder Polyisocyanatgemischen der Diphenylmethanreihe und bestimmten, höherfunktionellen Polyetherpolyolen, ein Verfahren zur Herstellung dieser Polyisocyanatmischungen und ihre Verwendung als Polyisocyanatkomponente bei der Herstellung von Polyurethan-Weichschaumstoffen, insbesondere von Polyurethan-Weichformschaumstoffen.

Es ist bekannt, 4,4′-Diisocyanatodiphenylmethan oder Polyisocyanatgemische der Diphenylmethanreihe, die als Hauptkomponente 4,4′-Diisocyanatodiphenylmethan enthalten durch Modifizierung mit unterschüssigen Mengen an Polyetherpolyolen so zu modifizieren, daß die resultierenden NCO-Semiprepolymeren eine verringerte Tendenz zum Abscheiden vom festen 4,4′-Diisocyanatdiphenylmethan aufweisen und daher bei Raumtemperatur und auch tieferen Temperaturen stabile Flüssigkeiten darstellen (vgl. z.B. DE-PS 1 618 380, GB-PS 1 369 334, DE-OS 2 913 126, DE-OS 2 404 166, DE-OS 2 346 996, DE-AS 2 737 338, DE-AS 2 624 526, DE-OS 2 513 793, DE-OS 2 513 796, EP-A-00 10 850, EP-A-00 22 617 oder EP-A-0 111 121). NCO-Semiprepolymere (unter diesem Begriff sind Gemische von überschüssigem Ausgangspolyisocyanat mit Urethan-modifiziertem Ausgangspolyisocyanat zu verstehen) auf Basis von Polyisocyanaten oder Polyisocyanatgemischen der Diphenylmethanreihe und höhermolekularen Polyetherpolyolen, wie sie beispielsweise in EP-A-00 10 850 oder EP-A-0 111 121 beschrieben sind, stellen im übrigen Polyisocyanat-Zusammensetzungen dar, die in neuerer Zeit zunehmend zur Herstellung von weichen Polyurethanschaumstoffen, insbesondere von kalthärtenden Polyurethanweichformschaumstoffen verwendet werden.

Einsatzgebiete für diese Schaumstoffe sind z.B. Polstermaterialien in Fahrzeugen oder für Möbeln oder die Teppichhinterschäumung.

Wie jetzt gefunden wurde, stellen insbesondere solche NCO-Semiprepolymere auf Basis von Polyisocyanaten oder Polyisocyanatgemishen der Diphenylmethanreihe wertvolle, bei Raumtemperatur flüssige Ausgangsmaterialien für die Herstellung von Polyurethanweichschaumstoffen dar, deren Polyetherkomponente aus mindestens einem Polyetherpolyol mit einem Hydroxyläquivalentgewicht von 500 bis 3000 und einer Hydroxylfunktionalität von größer als 4 besteht. Als Vorteile dieser erfindungsgemäßen, nachstehend näher beschriebenen Polyisocyanatmischungen sind zu nennen:

- Es können Weichschaumstoffe einer vergleichsweise niedrigen Rohdichte bei unvermindert guten mechanischen Eigenschaften hergestellt werden.
- Der Kennzahlbereich und damit der zugängliche Härtebereich bei unveränderter Polyolkomponente ist groß. Dies bedeutet, typische Weichformschaum-Formulierungen unter Verwendung der erfindungsgemäßen Polyisocyanatmischungen lassen sich ohne Probleme innerhalb des Kennzahlbereichs von 80 bis 120 verarbeiten.
- Die erfindungsgemäßen Polyisocyanatmischungen gestatten die Herstellung von weichen Schaumstoffen unter Verwendung von für Weichschaumstoffe auf MDI-Basis atypisch hohen Mengen an Wasser als Treibmittel, welches in einer Konzentration von bis zu 6 Gew.-%, bezogen auf Polyol-Komponente, zur Anwendung gelangen kann. Damit sind Formschaumstoffe mit Rohdichten bis unter 40 kg/m³ ohne Verwendung physikalischer Treibmittel zugänglich.
- Die mechanischen Eigenschaften der Schaumstoffe, insbesondere die Zugfestigkeit und die Bruchdehnung sind hervorragend. Dies ist überraschend, da die Verwendung von höhermolekularen Polyetherpolyolen mit einer über 3 und insbesondere über 4 liegenden Hydroxylfunktionalität als Teil der mit der Polyisocyanatkomponente umzusetzenden Polyolkomponente bei der Hestellung von Polyurethanweichschaumstoffen unüblich ist und im allgemeinen auch zu einer Verminderung der Zugfestigkeit führt.

Gegenstand der Erfindung sind bei Raumtemperatur flüssige, Urethangruppen enthaltende Polyisocyanatmischungen mit einem NCO-Gehalt von 15 bis 30 Gew.-%, erhalten durch Umsetzung von

a1) Polyisocyanaten oder Polyisocyanatgemischen der Diphenylmethan-Reihe mit einem Gehalt an Diisocyanatodiphenylmethan-Isomeren von 50 bis 100 Gew.-%

mit

b) unterschüssigen Mengen mindestens eines Polyetherpolyols eines (mittleren) Hydroxyläquivalentgewichts von 500 bis 3000 und einer (mittleren) Hydroxylfunktionalität von größer als 4,

und gegebenenfalls anschließende Abmischung des aus den Komponenten a1) und b) erhaltenen Umsetzungsprodukts mit

a2) urethangruppenfreien Polyisocyanaten oder Polyisocyanatgemischen der Diphenylmethanreihe mit einem Gehalt an Diisocyanatodiphenylmethan-Isomeren von 40 bis 100 Gew.-%,

mit der Maßgabe, daß der Gehalt der Komponenten a1) und a2) an Diisocyanatodiphenylmethan-Isomeren insgesamt bei 50 bis 95 Gew.-% und der Gehalt der beiden Ausgangskomponenten an höher als difunktionellen Polyisocyanaten der Diphenylmethanreihe insgesamt bei 5 bis 50 Gew.-% liegt.

Gegenstand der Erfindung ist auch ein Verfahren zur Herstellung dieser Polyisocyanatmischungen durch Umsetzung von

a1) einem Polyisocyanat oder Polyisocyanatgemisch der Diphenylmethanreihe mit einem Gehalt an Isocyanatodiphenylmethan-Isomeren von 50 bis 100 Gew.-%

mit

b) einer unterschüssigen Menge mindestens eines Polyetherpolyols

und gegebenenfalls anschließende Abmischung des aus den Komponenten a1) und b) erhaltenen Umsetzungsprodukts mit

a2) urethangruppenfreiem Polyisocyanat oder Polyisocyanatgemisch der Diphenylmethanreihe mit einem Gehalt an Diisocyanatodiphenylmethan-Isomeren von 40 bis 100 Gew.-%,

mit der Maßgabe, daß der Gesamtgehalt der Komponenten a1) und a2) an Diisocyanatodiphenylmethan-Isomeren bei 50 bis 95 Gew.-% und der Gesamtgehalt dieser Ausgangskomponenten an höher als difunktionellen Polyisocyanaten der Diphenylmethanreihe bei 5 bis 50 Gew.-% liegt,

dadurch gekennzeichnet,

daß man als Komponente b) mindestens ein Polyetherpolyol eines (mittleren) Hydroxyläquivalentgewichts von 500 bis 3000 und einer (mittleren) Hydroxylfunktionalität von größer als 4 verwendet.

Gegenstand der Erfindung ist schließlich auch die Verwendung dieser Polyisocyanatmischungen als Polyisocyanatkomponente bei der Herstellung von Polyurethan-Weichschaumstoffen.

Der Begriff "Polyisocyanat der Diphenylmethanreihe" stellt den Oberbegriff für alle Di- und Polyisocyanate dar, die bei der Phosgenierung von Anilin/Formaldehyd-Kondensaten entstehen und in den Phosgenierungsprodukten als Gemisch vorliegen. Der Begriff "Polyisocyanatgemisch der Diphenylmethanreihe" umfaßt beliebige Gemische von "Polyisocyanaten der Diphenylmethanreihe", d.h. sowohl die genannten Phosgenierungsprodukte von Anilin/Formaldehyd-Kondensaten als auch solche Gemische, wie sie durch Abmischung einzelner "Polyisocyanate der Diphenylmethanreihe" und/oder unterschiedlicher Mischungen hiervon entstehen, als auch solche Gemische von "Polyisocyanaten der Diphenylmethanreihe" wie sie durch partielle Destillation von Phosgenierungsprodukten von Anilin/Formaldehyd-Kondensaten als Destillat bzw. Destillationsrückstand anfallen.

Bei der Durchführung des erfindungsgemäßen Verfahrens wird die Polyisocyanatkomponente a1) mit der Polyetherpolyol-Komponente b) innerhalb des Temperaturbereichs von 0 bis 100°C, vorzugsweise 20 bis 80°C zur Reaktion gebracht, wobei das Mengenverhältnis der Komponenten a1) und b) einem NCO/OH-Äquivalentverhältnis von 1:0,002 bis 1:0,2, vorzugsweise 1:0,003 bis 1:0,03 entspricht, worauf sich gegebenenfalls eine Abmischung des so erhaltenen Umsetzungsprodukts mit der Polyisocyanatkomponente a2) anschließt. Die Reaktionszeit zwischen den Komponenten a1) und b) liegt im allgemeinen bei 0,5 bis 12, vorzugsweise 1 bis 4 Stunden.

Als Ausgangskomponente a1) eignen sich im Prinzip alle beliebigen Polyisocyanate oder Polyisocyanatgemische der Diphenylmethanreihe mit einem Gehalt an Diisocyanatodiphenylmethan-Isomeren von mindestens 50 Gew.-%. Gut geeignet sind insbesondere solche Polyisocyanatgemische der Diphenylmethanreihe, die einen Gehalt an Diisocyanatodiphenylmethan-Isomeren von 60 bis 95, insbesondere 70 bis 90 Gew.-% aufweisen und zum Rest aus höherfunktionellen Polyisocyanaten der Diphenylmethanreihe bestehen oder auch Diisocyanatodiphenylmethan-Isomere bzw. -Isomerengemische, die keine höherfunktionellen Polyisocyanate enthalten. Als Komponente a1) kommen demzufolge z.B. reines 4,4'-Diisocyanatodiphenylmethan, dessen Gemische mit bis zu 50, vorzugsweise 10 bis 40 Gew.-%, bezogen auf Gemisch, an 2,4'-Diisocyanatodiphenylmethan und gegebenenfalls bis zu 5 Gew.-%, bezogen auf Gemisch, an 2,2'-Diisocyanatodiphenylmethan oder auch Polyisocyanatgemische der Diphenylmethanreihe in Betracht, die neben diesen Diisocyanaten bis zu 50, vorzugsweise bis zu 40 Gew.-%, bezogen auf Gesamtgemisch, an höherfunktionellen Polyisocyanaten der Diphenylmethanreihe enthalten. Besonders bevorzugt als Komponente a1) sind solche Diisocyanatgemische der zuletzt genannten Isomerenverteilung bzw. solche, höherfunktionelle Polyisocyanate enthaltende Gemische, deren Diisocyanat-Anteil der zuletzt genannten Isomeren-Verteilung entspricht. Derartige Polyisocyanatgemische mit erhöhtem Anteil an 2,4'-Diisocyanatodiphenylmethan können beispielsweise durch Phosgenierung der ihnen entsprechenden Polyamingemische erhalten werden, die ihrerseits auf direktem Weg durch Anilin/Formaldehyd-Kondensation gemäß DE-OS 3 407 494 zugänglich sind. Der Gehalt der Diisocyanat- bzw. Polyisocyanatgemische an 2,4'-Diisocyanatodiphenylmethan kann gewünschtenfalls auch durch Abmischung mit an 2,4'-Diisocyanatodiphenylmethan angereicherten Fraktionen erhöht werden, wie sie beim Andestillieren von Phosgenierungsprodukten von Anilin/Formaldehyd-Kondensaten als Destillat erhältlich sind.

Die als Komponente b) geeignete Polyether-Komponente besteht aus mindestens einem Polyetherpolyol eines von 500 bis 3000 liegenden Hydroxyläquivalentgewichts und einer über 4 liegenden Hydroxylfunk-

3

tionalität. Im Falle der Verwendung von Polyether-Gemischen liegt das mittlere Hydroxyläquivalentgewicht des Gemischs ebenfalls bei 500 bis 3000 und seine mittlere Funktionalität ebenfalls über 4. Der Begriff "ein Polyetherpolyol" soll hierbei auch solche Polyetherpolyole umfassen die durch Alkoxylierung eines Startergemischs anfallen und daher eigentlich bereits Gemische darstellen (ein Polyetherpolyol = ein Alkoxylierungsprodukt). Der Begriff "Polyetherpolyol-Gemisch" steht seinerseits für Abmischungen unterschiedlicher, derartiger Alkoxylierungsprodukte. Besonders bevorzugt werden solche Polyetherpolyole bzw. Polyetherpolyol-Gemische eingesetzt, die ein (mittleres) Hydroxyläquivalentgewicht von 800 bis 2500 und eine (mittlere) Hydroxylfunktionalität von 4,5 bis 6 aufweisen. Im übrigen handelt es sich bei diesen Polyetherpolyolen um solche, deren Polyetherketten zu 70 bis 100 Gew.-% aus polymerisierten Propylenoxideinheiten und zum Rest aus polymerisierten Ethylenoxideinheiten bestehen, wobei die Ethylenoxid-Einheiten in statistischer Verteilung und/oder in Form von innerhalb der Ketten angeordneten Polyethylenoxid-Blöcken und/oder endständig angeordnet sein können. Besonders bevorzugt sind solche Polyetherpolyole der genannten Art, die bis zu 30, insbesondere 5 bis 25 Gew.-% an ausschließlich endständig angeordneten, polymerisierten Ethylenoxideinheiten, bezogen auf die Gesamtmenge der vorliegenden Alkylenoxideinheiten, aufweisen. Derartige Polyetherpolyole werden in bekannter Weise durch Propoxylierung von geeigneten Startermolekülen und anschließende Ethoxylierung der Propoxylierungsprodukte erhalten.

Die Polyetherpolyole können in an sich bekannter Weise durch Alkoxylierung von geeigneten Startermolekülen in Gegenwart von basischen Katalysatoren erhalten werden, wobei als Alkylenoxide, den oben gemachten Ausführungen entsprechend, Propylenoxid und gegebenenfalls Ethylenoxid zum Einsatz gelangen.

Als Startermoleküle kommen beliebige niedermolekulare Verbindungen oder Gemische von Verbindungen in Betracht, die (im statistischen Mittel) bezüglich ihrer OH- bzw. NH-Funktionalität jedoch so ausgewählt sein müssen, daß sie Polyetherpolyole der genannten Hydroxylfunktionalität ergeben. Geeignete Startermoleküle sind demzufolge insbesondere höher als vierwertige Alkohole wie beispielsweise Sorbit, Sorbose oder Rohrzucker bzw. deren Abmischungen mit anderen mehrwertigen, niedermolekularen Alkoholen wie Propylenglykol, Trimethylolpropan, Glycerin, Pentaerythrit oder auch mit Wasser, immer vorausgesetzt, daß die mittlere Funktionalität des Gemischs der Startermoleküle den genannten Bedingungen bezüglich der Hydroxylfunktionalität entspricht. Ebenfalls als Startermoleküle bzw. als Abmischkomponente zur Herstellung des Startergemisch geeignet, jedoch weniger bevorzugt, sind niedermolekulare, mindestens zwei NH-Gruppierungen aufweisende Verbindungen wie Ethylendiamin, Diethylentriamin oder 2,4-Diaminotoluol.

Zur Herstellung der Umsetzungsprodukte aus den Ausgangskomponenten a1) und b), werden diese, entsprechend den oben gemachten Ausführungen bezüglich der Mengenverhältnisse und bezüglich der Reaktionstemperatur miteinander zur Reaktion gebracht, wobei vorzugsweise die Polyisocyanatkomponente vorgelegt und die Polyolkomponente zu dem vorgelegten Polyisocyanat zudosiert wird.

Als gegebenenfalls mit dem Reaktionsprodukt aus a1) und b) abzumischende Polyisocyanatkomponente a2) kommen grundsätzlich Polyisocyanate oder Polyisocyanatgemische der Diphenylmethanreihe der bereits unter a1) genannten Art in Betracht, wobei selbstverständlich die Komponenten a1) und a2) nicht die gleiche Zusammensetzung aufweisen müssen. Außer den unter a1) bereits genannten Polyisocyanaten bzw. Polyisocyanatgemischen können jedoch als Komponente a2) in gewissen Fällen auch solche Polyisocyanatgemische der Diphenylmethanreihe verwendet werden, die einen bis zu 60 Gew.-% liegenden Anteil an höher als difunktionellen Polyisocyanaten aufweisen. Dies ist jedoch weniger bevorzugt. Vorzugsweise werden als gegebenenfalls einzusetzende Abmischkomponente a2) Polyisocyanatgemische der Diphenylmethanreihe verwendet, die 50 bis 80, insbesondere 50 bis 70 Gew.-% an Diisocyanatodiphenylmethan-Isomeren aufweisen und zum Rest aus höherfunktionellen Polyisocyanaten der Diphenylmethanreihe bestehen. Die Verwendung von ausschließlich difunktionellen Diisocyanaten bzw. Diisocyanatgemischen als Komponente a2) ist zwar im Prinzip ebenfalls möglich, jedoch weniger bevorzugt. Auch als Abmischkomponente a2) werden bevorzugt solche Polyisocyanatgemische der Diphenylmethanreihe verwendet, deren Diisocyanatodiphenylmethan-Isomeren sich zu 60 bis 90 Gew.-% aus 4,4′-Diisocyanatodiphenylmethan, zu 10 bis 40 Gew.-% aus 2,4′-Diisocyanatodiphenylmethan und zu 0 bis 5 Gew.-% aus 2,2′-Diisocyanatodiphenylmethan zusammensetzen, wobei sich die genannten Prozentsätze zu 100 ergänzen.

Die Art und Mengenverhältnisse der Ausgangskomponenten a1), b) und gegebenenfalls a2) werden im übrigen im Rahmen der gemachten Ausführungen vorzugsweise so gewählt, daß die erfindungsgemäßen Polyisocyanatmischungen einen NCO-Gehalt von 15 bis 30 Gew.-%, vorzugsweise 20 bis 28 Gew.-% aufweisen, wobei die Ausgangskomponenten a1) und a2) insgesamt einen Anteil an Diisocyanatodiphenylmethan-Isomeren von 50 bis 95 Gew.-% und einen Gehalt an höher als difunktionellen Polyisocyanaten der Diphenylmethanreihe von 5 bis 50 Gew.-% aufweisen, wobei sich die Diisocyanate bevorzugt, zu 60 bis 90, insbesondere 65 bis 85 Gew.-% aus 4,4′-Diisocyanatodiphenylmethan, zu 10 bis 40, insbesondere 15 bis 35 Gew.-% aus 2,4′-Diisocyanatodiphenylmethan und zu 0 bis 5 Gew.-% aus 2,2′-Diisocyanatodiphenylmethan zusammensetzen, wobei sich die genannten Prozentsätze jeweils zu 100 ergänzen.

Bei der erfindungsgemäßen Verwendung der erfindungsgemäßen Polyisocyanatmischungen zur Herstellung von Polyurethan-Weichschaumstoffen werden diese in an sich bekannter Weise mit einer geeigneten "Polyol-Komponente" unter Einhaltung einer Isocyanat-Kennzahl von unter 130, vorzugsweise 80 bis 120 zur Reaktion gebracht. Unter "Isocyanatkennzahl" ist hierbei der Quotient aus der Anzahl der im Reaktionsgemisch vorliegenden Isocyanatgruppen geteilt durch die Anzahl der im Reaktionsgemisch vorliegenden Hydroxylgruppen, multipliziert mit 100 zu verstehen.

Die "Polyol-Komponente" stellt ein Gemisch aus den gegenüber Isocyanatgruppen reaktionsfähigen Verbindungen und den zum Einsatz gelangenden Hilfs- und Zusatzmitteln dar. Im einzelnen enthält die "Polyol-Komponente" folgende Bestandteile:

1. Verbindungen mit mindestens zwei gegenüber Isocyanaten reaktionsfähigen Wasserstoffatomen von einem Molekulargewicht in der Regel von 400 - 10.000. Hierunter versteht man vorzugsweise Hydroxylgruppen aufweisende Verbindungen, insbesondere 2 bis 6, vorzugsweise 2 bis 4 Hydroxylgruppen aufweisende Verbindungen, speziell solche vom Molekulargewicht 1.000 bis 6.000, vorzugsweise 3.000 bis 6.000, z.B. 2 bis 6, vorzugsweise 2 bis 4 Hydroxylgruppen aufweisende Polyether oder Polyester, insbesondere Polyether, wie sie für die Herstellung von homogenen und von zellförmigen Polyurethanen an sich bekannt sind und wie sie z. B. in der DE-OS 2 832 253, Seiten 11 ff. beschrieben werden. Vorzugsweise weisen sie eine OH-Zahl von 28 bis 56 auf.

2. Gegebenenfalls Verbindungen mit mindestens 2 gegenüber Isocyanaten reaktionsfähigen Wasserstoffatomen und einem Molekulargewicht von 62 bis 399. Auch in diesem Fall versteht man hierunter insbesondere Hydroxylgruppen aufweisende Verbindungen, die als Kettenverlängerungsmittel oder Vernetzungsmittel dienen. Diese Verbindungen weisen im allgemeinen 2 bis 4, gegenüber Isocyanaten reaktionsfähige Wasserstoffatome auf. Beispiele hierfür werden in der DE-OS 2 832 253, Seiten 10 ff. beschrieben.

3. Wasser als Treibmittel in einer Menge von 1 bis 6 Gew.-Teilen pro 100 Gew.-Teile der Komponente 1)

4. Gegebenenfalls Hilfs- und Zusatzmittel wie
   a) leicht flüchtige organische Substanzen als weitere Treibmittel,
   b) Reaktionsbeschleuniger und Reaktionsverzögerer der an sich bekannten Art in den an sich üblichen Mengen,
   c) oberflächenaktive Zusatzstoffe, wie Emulgatoren und Schaumstabilisatoren,

ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielswise in der DE-OS 2 732 292, Seiten 21 ff., beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z B. auf den Seiten 103-113 beschrieben.

Die Reaktionskomponenten werden vorzugsweise nach dem an sich bekannten Einstufenverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121-205, beschrieben.

Erfindungsgemäß wird die Verschäumung vorzugsweise in geschlossenen Formen durchgeführt. Dabei wird das Reaktionsgemisch in eine Form eingetragen. Als Formmaterial kommt Metall, z. B. Aluminium oder Kunststoff, z. B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird somit unter "over-charging" gearbeitet; eine derartige Verfahrensweise ist z. B. aus den US-Patentschriften 3 178 490 und 3 182 104 bekannt.

In den nachfolgenden Beispielen beziehen sich alle Prozentangaben bezüglich der Zusammensetzung der Ausgansmaterialien auf Gewichtsprozente. Die Abkürzung "MDI" steht für "Diisocyanatodiphenylmethan". Die Abkürzung "polymeres MDI" steht für Polyisocyanate der Diphenylmethanreihe mit einer über 2 liegenden NCO-Funktionalität. Die Abkürzung "Roh-MDI" steht für ein rohes, undestilliertes Polyisocyanatgemisch der Diphenylmethanreihe, wie es durch Phosgenierung von Anilin/Formaldehyd-Kondensat erhalten wird.

Beispiel 1

Herstellung des MDI-Semiprepolymeren

20,0 Gew.-Teile eines Polyetherpolyols der OH-Zahl 28, hergestellt durch Propoxylierung von Sorbit und anschließende Ethoxylierung des Propoxylierungsprodukts (Ethylenoxidgehalt = 13 %) werden unter Rühren bei 60 bis 80°C in Roh-MDI mit einem NCO-Gehalt von 32,5 % folgender Zusammensetzung eingetragen:

| 47,5 | Gew.-Teile 4,4′ MDI |
|------|---------------------|
| 18,4 | Gew.-Teile 2,4′ MDI |
| 2,1 | Gew.-Teile 2,2′ MDI |
| 12,0 | Gew.-Teile polymeres MDI. |

Nach einer Reaktionszeit von etwa 3 Stunden läßt man die Reaktionsmischung abkühlen. Die Reaktionstemperatur beträgt etwa 70°C.

Der analytisch bestimmte NCO-Gehalt liegt bei 25,3 %. Die Polyisocyanatmischung zeigt nach mehrmonatiger Lagerung bei 0°C keine Sedimentbildung.

Vergleichsbeispiel I

20,0 Gew.-Teile eines Polyetherpolyols der OH-Zahl 28, hergestellt durch Propoxylierung von Trimethylolpropan und anschließende Ethoxylierung des Propoxylierungsprodukts (Ethylenoxidgehalt = 13 %) werden unter Rühren bei 60 bis 80°C in das Roh-MDI gemäß Beispiel 1 eingetragen. Nach einer Reaktionszeit von etwa 3 Stunden läßt man die Reaktionsmischung abkühlen. Die Reaktionstemperatur beträgt etwa 70°C. Es entsteht ein Polyisocyanatgemisch mit einem NCO-Gehalt von 25,3%.

Beispiel 2

Herstellung eines Polyurethan-Weichschaumstoffes

A-Komponente

100 Gew.-Teile des Polyetherpolyols der OH-Zahl 28 gemäß Beispiel 1.

3,4 Gew.-Teile Wasser

1,0 Gew.-Teil eines handelsüblichen Aminkatalysators (®Dabco XED 20 der Fa. Air Products)

1,0 Gew.-Teil Methyldicyclohexylamin

0,3 Gew.-Teile Triethylamin

0,6 Gew.-Teile eines handelsüblichen Vernetzers auf Basis aliphatischer Polyamine (PU-Vernetzer 56 der Bayer AG)

0,5 Gew.-Teile eines handelsüblichen Polyetherpoly-siloxan-Stabilisators (B 5246 der Fa. Goldschmidt AG)

2,0 Gew.-Teile eines Polyetherpolyols der OH-Zahl 36, hergestellt durch Propoxylierung von Glyzerin und anschließender Ethoxylierung des Propoxylierungsprodukts mit einem Gehalt an polymerisierten Oxyethylen-gruppen von 73 %.

B-Komponente

| Semipolymeres nach Beispiel 1 | |
|---|---|
| 100 Gew.-Teile<br>69 Gew.-Teile | der A-Komponente werden mit<br>der B-Komponente auf einer Hochdruckmaschine vermischt (NCO-Kennzahl = 100). |

Das Reaktionsgemisch wird in eine 40 Liter Kastenform eingetragen, die auf etwa 25°C angewärmt ist. Die Form wird geschlossen und nach etwa 6 Minuten wird das Formteil aus der Form genommen. Das Füllgewicht (2,03 kg) wird experimentell ermittelt. Es ergeben sich folgende Werte bei der mechanischen Prüfung.

| Prüfergebnisse: | | | |
|---|---|---|---|
| Rohdichte | $(kg/m^3)$ | DIN 53 420 | 45,2 |
| Stauchhärte 40 % | (kPa) | DIN 53 577 | 2,82 |
| Zugfestigkeit | (kPa) | DIN 53 571 | 152 |
| Bruchdehnung | (%) | DIN 53 571 | 132 |
| DVR 50 %, $C_t$-Wert | (%) | DIN 53 572 | 7,1 |

Vergleichsbeispiel II

Herstellung eines Polyurethan-Weichschaumstoffes

A-Komponente entsprechend Beispiel 2
B-Komponente entsprechend Vergleichsbeispiel I
Verarbeitungsparameter wie in Beispiel 2, ein höheres Füllgewicht (2,22 kg) wird aber notwendig, um die Form völlig mit dem sich bildenden Schaum auszufüllen. Folgende Werte ergeben die Messungen der mechanischen Eigenschaften eins Schaumteils:

| Prüfergebnisse: | | | |
|---|---|---|---|
| Rohdichte | $(kg/m^3)$ | DIN 53 420 | 49,3 |
| Stauchhärte 40 % | (kPa) | DIN 53 577 | 2,83 |
| Zugfestigkeit | (kPa) | DIN 53 571 | 139 |
| Bruchdehnung | (%) | DIN 53 571 | 139 |
| DVR 50 %, $C_t$-Wert | (%) | DIN 53 572 | 6,7. |

Der Vergleich der Schaumeigenschaften von Beispiel 2 mit denen von Vergleichsbeispiel II zeigt, daß trotz der um 9 % erniedrigten Rohdichte in Beispiel 2 ein mindestens ebenso gutes mechanisches Werteniveau erreicht wird wie in Vergleichsbeispiel II.

Beispiel 3

Herstellung eines Polyurethan-Weichschaumstoffes

A-Komponente:

| 100 Gew.-Teile des Polyetherpolyols der OH-Zahl 28 gemäß Beispiel 1. | |
|---|---|
| 5,5 Gew.-Teile | Wasser |
| 1,0 Gew.-Teil | Methyldicyclohexylamin |
| 0,2 Gew.-Teile | Triethylamin |
| 0,4 Gew.-Teile | einer 33 %igen Lösung von Diazabicyclo(2.2.2)octan in Dipropylenglykol |
| 0,6 Gew.-Teile | Dimethylaminopropylamin |
| 0,6 Gew.-Teile | eines handelsüblichen Vernetzers auf Basis aliphatischer Polyamine (PU-Vernetzer 56 der Bayer AG) |
| 0,5 Gew.-Teile | B 5246 der Fa. Goldschmit AG |
| 3,0 Gew.-Teile | des Polyetherpolyols der OH-Zahl 36 gemäß Beispiel 2 |

B-Komponente

| Semipolymeres nach Beispiel 1 | |
|---|---|
| 100 Gew.-Teile | der A-Komponente werden mit |
| 93 Gew.-Teile | der B-Komponente auf einer Hochdruckmaschine vermischt (NCO-Kennzahl = 90). |

Die weiteren Schäumbedingungen sind analog zu Beispiel 2. Folgende Werte ergeben die Messungen der mechanischen Eigenschaften eines Schaumteiles:

| Prüfergebnisse: | | | |
|---|---|---|---|
| Rohdichte | (kg/m$^3$) | DIN 53 420 | 39,4 |
| Stauchhärte 40 % | (kPa) | DIN 53 577 | 5,31 |
| Zugfestigkeit | (kPa) | DIN 53 571 | 232 |
| Bruchdehnung | (%) | DIN 53 571 | 137 |
| DVR 50 %, $C_t$-Wert | (%) | DIN 53 572 | 10,0 |

Beispiel 4

Herstellung von Polyurethan-Weichschaumstoffen

A-Komponente

10 Gew.-Teile einer Dispersion der OH-Zahl 28 eines organischen Füllstoffs in einem Polyetherpolyol, welches durch Propoxylierung von Trimethylolpropan und anschließende Ethoxylierung des Propoxylierungsprodukts erhalten worden ist (Ethylenoxidgehalt = 13 %) und seinerseits eine OH-Zahl von 35 aufweist. Bei dem Füllstoff handelt es sich um ein in dem Polyetherpolyol hergestelltes Umsetzungsprodukt von Diisocyanatotoluol (80 % 2,4- und 20 % 2,6-Isomere) mit Hydrazinhydrat im NCO/NH$_2$-Äquivalentverhältnis 1:1.

90 Gew.-Teile eines Polyetherpolyols der OH-Zahl 35, hergestellt durch Propoxylierung von Trimethylolpropan und anschließende Ethoxylierung des Propoxylierungsprodukts (Ethylenoxidgehalt = 13 %).

```
90 Gew.-Teile eines Polyetherpolyols der OH-Zahl 35,
            hergestellt durch Propoxylierung von Trimethylolpropan
            und anschließende Ethoxylierung des Propoxylierungspro-
            dukts (Ethylenoxidgehalt = 13 %).


3,2 Gew.-Teile Wasser
0,1 Gew.-Teil  Bis(dimethylaminoethyl)ether
0,3 Gew.-Teile einer 33 %igen Lösung von Diazabicyclo-
            (2,2,2)octan in Dipropylenglykol
0,5 Gew.-Teile N,N-Bis(dimethylaminopropyl)formamid
1,0 Gew.-Teil  Diethanolamin
1,5 Gew.-Teile Triethanolamin
1,0 Gew.-Teil  eines Polyetherpolyols der OH-Zahl 100,
            hergestellt durch Propoxylierung von Sorbit und anschließende Ethoxylierung
            des Propoxylierungsprodukts (Ethylenoxid-
            gehalt = 80 %).
0,5 Gew.-Teile eines handelsüblichen Polyetherpoly-
            siloxan-Stabilisators (B 4113 der Fa.
            Goldschmidt AG)
```

B-Komponente

| Semipolymeres nach Beispiel 1 | |
|---|---|
| 100 Gew.-Teile | der A-Komponente werden mit |
| 72,8 Gew.-Teile | der B-Komponente bei einer Kennzahl von 100 auf einer Hochdruckmaschine vermischt. |

Die weiteren Verschäumungsbedingungen sind analog zu Beispiel 2.

In vier weiteren Parallelversuchen wurde die Kennzahl im Bereich von 80 bis 120 variiert. Die jeweils gefundenen mechanischen Eigenschaften werden nachstehend mitgeteilt.

| Prüfergebnisse: | | | | | |
|---|---|---|---|---|---|
| Kennzahl | 100 | 110 | 120 | 90 | 80 |
| Rohdichte (kg/m$^3$) DIN 53 420 | 48,7 | 50,7 | 52,0 | 53,4 | 53,7 |
| Stauchhärte 40 % (kPa) DIN 53 577 | 3,55 | 5,55 | 8,00 | 3,33 | 2,77 |
| Zugfestigkeit (kPa) DIN 53 571 | 138 | 137 | 167 | 130 | 106 |
| Bruchdehnung (%) DIN 53 571 | 105 | 102 | 97 | 110 | 112 |
| DVR 50 %, $C_t$-Wert (%) DIN 53 572 | 4,9 | 4,4 | 4,1 | 4,5 | 5,4 |

**Patentansprüche**

1. Flüssige, Urethangruppen enthaltende Polyisocyanatmischungen mit einem NCO-Gehalt von 15 bis 30 Gew.-%, erhalten durch Umsetzung von

   a1) Polyisocyanaten oder Polyisocyanatgemischen der Diphenylmethan-Reihe mit einem Gehalt an Diisocyanatodiphenylmethan-Isomeren von 50 bis 100 Gew.-%

   mit

   b) unterschüssigen Mengen mindestens eines Polyetherpolyols eines (mittleren) Hydroxyläquivalentgewichts von 500 bis 3000 und einer (mittleren) Hydroxylfunktionalität von größer als 4,

   und gegebenenfalls anschließende Abmischung des aus den Komponenten a1) und b) erhaltenen Umsetzungsprodukts mit

   a2) urethangruppenfreien Polyisocyanaten oder Polyisocyanatgemischen der Diphenylmethanreihe mit einem Gehalt an Diisocyanatodiphenylmethan-Isomeren von 40 bis 100 Gew.-%,

   mit der Maßgabe, daß der Gehalt der Komponenten a1) und a2) an Diisocyanatodiphenylmethan-Isomeren insgesamt bei 50 bis 95 Gew.-% und der Gehalt der beiden Ausgangskomponenten an höher als difunktionellen Polyisocyanaten der Diphenylmethanreihe insgesamt bei 5 bis 50 Gew.-% liegt,

2. Flüssige Polyisocyanatmischungen gemäß Anspruch 1, dadurch gekennzeichnet, daß es sich bei der Komponente b) um mindestens ein Polyetherpolyol mit polymerisierten Alkylenoxideinheiten handelt, die sich zu 70 bis 100 Gew.-% aus Propylenoxideinheiten und zu 0 bis 30 Gew.-% aus Ethylenoxideinheiten zusammensetzen, wobei die gegebenenfalls vorliegenden Ethylenoxideinheiten in den Polyetherketten in statistischer Verteilung, als innerhalb der Ketten eingebaute Blöcke und/oder endständig vorliegen können.

3. Polyisocyanatmischungen gemäß Anspruch 1 und 2, dadurch gekennzeichnet, daß die Komponente b) aus mindestens einem Polyetherpolyol besteht, welches 5 bis 25 Gew.-%, bezogen auf das Gesamtgewicht der polymerisierten Alkylenoxideinheiten, an polymerisierten endständig angeordneten Ethylenoxideinheiten aufweist.

4. Polyisocyanatmischungen gemäß Anspruch 1 bis 3, dadurch gekennzeichnet, daß sie die Diisocyanatodiphenylmethan-Isomeren mindestens einer der Komponenten a1) oder a2) aus 60 bis 90 Gew.-% 4,4'-Diisocyanatodiphenylmethan, 10 bis 40 Gew.-% 2,4'-Diisocyanatodiphenylmethan und 0 bis 5 Gew.-% 2,2'-Diisocyanatodiphenylmethan zusammensetzen, wobei sich die genannten Prozentsätze zu 100 ergänzen, mit der Maßgabe, daß der Gesamtgehalt der Komponenten a1) und a2) an 2,4'-Diisocyanatodiphenylmethan, bezogen auf den Gesamtgehalt an Diisocyanatodiphenylmethan-Isome-

EP 0 344 551 B1

ren, bei 10 bis 40 Gew.-% liegt.

5. Verfahren zur Herstellung von flüssigen, Urethangruppen enthaltenden Polyisocyanatmischungen gemäß Anspruch 1 durch Umsetzung von

a1) einem Polyisocyanat oder Polyisocyanatgemisch der Diphenylmethanreihe mit einem Gehalt an Isocyanatodiphenylmethan-Isomeren von 50 bis 100 Gew.-%
mit
b) einer unterschüssigen Menge mindestens eines Polyetherpolyols

und gegebenenfalls anschließende Abmischung des aus den Komponenten a1) und b) erhaltenen Umsetzungsprodukts mit

a2) urethangruppenfreiem Polyisocyanat oder Polyisocyanatgemisch der Diphenylmethanreihe mit einem Gehalt an Diisocyanatodiphenylmethan-Isomeren von 40 bis 100 Gew.-%,

mit der Maßgabe, daß der Gesamtgehalt der Komponenten a1) und a2) an Diisocyanatodiphenylmethan-Isomeren bei 50 bis 95 Gew.-% und der Gehalt dieser Ausgangskomponenten an höher als difunktionellen Polyisocyanaten der Diphenylmethanreihe bei 5 bis 50 Gew.-% liegt,
dadurch gekennzeichnet,
daß man als Komponente b) mindestens ein Polyetherpolyol eines (mittleren) Hydroxyläquivalentgewichts von 500 bis 3000 und einer (mittleren) Hydroxylfunktionalität von größer als 4 verwendet.

6. Verfahren gemäß Anspruch 5, dadurch gekennzeichnet, daß man als Komponente b) mindestens ein Polyetherpolyol mit polymerisierten Alkylenoxideinheiten einer (mittleren) Hydroxylfunktionalität von 4,5 bis 6 verwendet, dessen einpolymerisierten Alkylenoxideinheiten sich zu 30 bis 100 Gew.-% aus Propylenoxideinheiten und zu 0 bis 30 Gew.-% aus Ethylenoxideinheiten zusammensetzen, wobei die gegebenenfalls vorliegenden Ethylenoxideinheiten in den Polyetherketten in statistischer Verteilung, als innerhalb der Ketten vorliegende Blöcke und/oder endständig angeordnet sein können.

7. Verfahren gemäß Anspruch 5 und 6, dadurch gekennzeichnet, daß die Komponente b) aus mindestens einem Polyetherpolyol besteht, welches 5 bis 25 Gew.-%, bezogen auf das Gesamtgewicht der polymerisierten Alkylenoxideinheiten, an polymerisierten endständig angeordneten Ethylenoxideinheiten aufweist.

8. Verfahren gemäß Anspruch 5 bis 7, dadurch gekennzeichnet, daß sich die Diisocyanatodiphenylmethan-Isomeren mindestens einer der Komponenten a1) oder a2) aus 60 bis 90 Gew.-% 4,4′-Diisocyanatodiphenylmethan, 10 bis 40 Gew.-% 2,4′-Diisocyanatodiphenylmethan und 0 bis 5 Gew.-% 2,2′-Diisocyanatodiphenylmethan zusammensetzen, wobei sich die genannten Prozentsätze zu 100 ergänzen, mit der Maßgabe, daß der Gesamtgehalt der Komponenten a1) und a2) an 2,4′-Diisocyanatodiphenylmethan, bezogen auf den Gesamtgehalt an Diisocyanatodiphenylmethan-Isomeren, bei 10 bis 40 Gew.-% liegt.

9. Verwendung der Polyisocyanatmischungen gemäß Anspruch 1 bis 4 als Polyisocyanatkomponente bei der Herstellung von Polyurethan-Weichschaumstoffen.

**Claims**

1. Liquid polyisocyanate mixtures containing urethane groups, having an isocyanate content of from 15 to 30% by weight, obtained by the reaction of

a1) polyisocyanates or polyisocyanate mixtures of the diphenylmethane series containing from 50 to 100% by weight of diisocyanatodiphenylmethane isomers with
b) subequivalent quantities of at least one polyetherpolyol having a hydroxyl equivalent weight (average) of from 500 to 3000 and a hydroxyl functionality (average) greater than 4

optionally followed by mixing the reaction product obtained from components a1) and b) with

a2) urethane group-free polyisocyanates or polyisocyanate mixtures of the diphenylmethane series containing from 40 to 100% by weight of diisocyanatodiphenylmethane isomers

under the condition that components a1) and a2) contain a total of from 50 to 95% by weight of diisocyanatodiphenylmethane isomers and the two starting components contain a total of from 5 to 50% by weight of higher than difunctional polyisocyanates of the diphenylmethane series.

11

**2.** Liquid polyisocyanate mixtures according to Claim 1, characterised in that component b) is at least one polyetherpolyol containing polymerised alkylene oxide units composed of from 70 to 100% by weight of propylene oxide units and from 0 to 30% by weight of ethylene oxide units, in which the ethylene oxide units optionally present may be statistically distributed in the polyether chains, present as blocks built into the chains, and/or in end positions.

**3.** Polyisocyanate mixtures according to Claims 1 and 2, characterised in that component b) consists of at least one polyetherpolyol containing from 5 to 25% by weight of polymerised ethylene oxide units in end positions, based on the total weight of the polymerised alkylene oxide units.

**4.** Polyisocyanate mixtures according to Claims 1 to 3, characterised in that the diisocyanatodiphenylmethane isomers of at least one of the components a1) or a2) are composed of from 60 to 90% by weight of 4,4'-diisocyanatodiphenylmethane, from 10 to 40% by weight of 2,4'-diisocyanatodiphenylmethane and from 0 to 5% by weight of 2,2'-diisocyanatodiphenylmethane, the said percentages adding up to 100, under the condition that the total proportion of 2,4'-diisocyanatodiphenylmethane in components a1) and a2), based on the total quantity of diisocyanatodiphenylmethane isomers, is from 10 to 40% by weight.

**5.** A process for the preparation of liquid polyisocyanate mixtures containing urethane groups according to Claim 1 by the reaction of
   a1) a polyisocyanate or polyisocyanate mixture of the diphenylmethane series containing from 50 to 100% by weight of isocyanatodiphenylmethane isomers with
   b) a subequivalent quantity of at least one polyetherpolyol
optionally followed by mixing the reaction product obtained from components a1) and b) with
   a2) urethane group-free polyisocyanate or polyisocyanate mixture of the diphenylmethane series containing from 40 to 100% by weight of diisocyanatodiphenylmethane isomers,
under the condition that the total amount of diisocyanatodiphenylmethane isomers in components a1) and a2) is from 50 to 95% by weight and the total amount of higher than difunctional polyisocyanates of the diphenylmethane series in these starting components is from 5 to 50% by weight, characterised in that at least one polyetherpolyol having a hydroxyl equivalent weight (average) of from 500 to 3000 and a hydroxyl functionality (average) greater than 4 is used as component b).

**6.** A process according to Claim 5, characterised in that component b) comprises at least one polyetherpolyol containing polymerised alkylene oxide units and having a hydroxyl functionality (average) of from 4.5 to 6, in which from 30 to 100% by weight of the alkylene oxide units incorporated by polymerisation consist of propylene oxide units and from 0 to 30% by weight consist of ethylene oxide units, and the ethylene oxide units optionally present may be contained in the polyether chains in statistical distribution, as blocks within the chains and/or arranged in end positions.

**7.** A process according to Claims 5 and 6, characterised in that component b) consists of at least one polyetherpolyol having from 5 to 25% by weight, based on the total weight of the polymerised alkylene oxide units, of polymerised ethylene oxide units arranged in end positions.

**8.** A process according to Claims 5 to 7, characterised in that the diisocyanatodiphenylmethane isomers of at least one of the components a1) or a2) are composed of 60 to 90% by weight of 4,4'-diisocyanatodiphenylmethane, 10 to 40% by weight of 2,4'-diisocyanatodiphenylmethane and 0 to 5% by weight of 2,2'-diisocyanatodiphenylmethane, the said percentages adding up to 100, under the condition that the total amount of 2,4'-diisocyanatodiphenylmethane in components a1) and a2), based on the total amount of diisocyanatodiphenylmethane isomers, is from 10 to 40% by weight.

**9.** Use of the polyisocyanate mixtures according to Claims 1 to 4 as polyisocyanate component for the production of flexible polyurethane foams.

**Revendications**

**1.** Mélanges liquides de polyisocyanates contenant des radicaux uréthanne avec une teneur en NCO de 15 à 30 % en poids obtenus par réaction
   a1) de polyisocyanates ou mélanges de polyisocyanates de la série des diphénylméthanes avec une teneur en isomères de diisocyanatodiphénylméthane de 50 à 100 % en poids
avec

b) des quantités insuffisantes d'au moins un polyétherpolyol d'un poids équivalent d'hydroxyle (moyen) de 500 à 3000 et une fonctionnalité hydroxyle (moyenne) de plus de 4,

et éventuellement mélange subséquent du produit d'addition obtenu à partir des composantes a1) et b) avec

a2) des polyisocyanates ou mélanges de polyisocyanates dépourvus de radicaux uréthanne , de la série des diphénylméthanes , avec une teneur en isomères de diisocyanatodiphénylméthane de 40 à 100 % en poids,

à la condition que la teneur des composantes a1) et a2) en isomères de diisocyanatodiphénylméthane soit globalement de 50 à 95 % en poids et que la teneur des deux composés de départ en polyisocyanates de la série des diphénylméthanes plus que difonctionnels soit globalement supérieure à 5 à 50 % en poids.

2. Mélanges liquides de polyisocyanates selon la revendication 1 caractérisés en ce que la composante b) est au moins un polyétherpolyol avec des unités alkylènoxyde polymérisées qui se composent pour 70 à 100 % en poids d'unités de propylèneoxyde et pour 0 à 30 % en poids d'unités éthylèneoxyde, les unités éthylèneoxyde éventuellement présentes dans les chaînes de polyéther pouvant se présenter dans une répartition statistique, en blocs intégrés à l'intérieur des chaînes et/ou en fin de chaîne.

3. Mélanges de polyisocyanates selon les revendications 1 et 2, caractérisés en ce que la composante b) se compose d'au moins un polyétherpolyol qui présente 5 à 25 % en poids d'unités éthylèneoxyde polymérisées disposées en fin de chaîne par rapport au poids total des unités alkylèneoxydes polymérisées.

4. Mélanges de polyisocyanates selon une des revendications 1 à 3, caractérisés en ce que les isomères de diisocyanatodiphénylméthane d'au moins une des composantes a1) ou a2) se composent de 60 à 90 % en poids de 4,4'-diisocyanatodiphénylméthane, 10 à 40 % en poids de 2,4'-diisocyanatodiphénylméthane et 0 à 5 % en poids de 2,2'-diisocyanatodiphénylméthane, le total des pourcentages cités atteignant 100, à condition que la teneur totale des composantes a1) et a2) en 2,4'-diisocyanatodiphénylméthane s'élève à 10 à 40 % en poids, par rapport à la teneur totale en isomères de diisocyanatodiphénylméthane.

5. Procédé de préparation de mélanges liquides de polyisocyanates contenant des radicaux uréthanne selon la revendication 1 par réaction

a1) d'un polyisocyanate ou d'un mélange de polyisocyanates de la série des diphénylméthanes avec une teneur en isomères de diisocyanatodiphénylméthane de 50 à 100 % en poids,
avec

b) des quantités insuffisantes d'au moins un polyétherpolyol

et éventuellement un mélange subséquent des produits de réaction obtenus à partir des composantes a1) et b) avec,

a2) des polyisocyanates ou mélanges de polyisocyanates de la série des diphénylméthanes, dépourvus de radicaux uréthanne, avec une teneur en isomères de diisocyanatodiphénylméthane de 40 à 100 % en poids,

à condition que la teneur totale des composantes a1) et a2) en isomères de diisocyanatodiphénylméthane s'élève à 50 à 95 % en poids et que la teneur des ces composantes de départ en polyisocyanates de la série des diphénylméthanes plus que difonctionnels soit de l'ordre de 5 à 50 % en poids,
caractérisé en ce que

la composante a) utilisée est au moins un polyétherpolyol d'un poids équivalent d'hydroxyle (moyen) de 500 à 3000 et d'une fonctionnalité hydroxyle (moyenne) de plus de 4.

6. Procédé selon la revendication 5, caractérisé en ce que la composante b) utilisée est au moins un polyétherpolyol avec des unités alkylèneoxyde polymérisées d'une fonctionnalité hydroxyle (moyenne) de 4,5 à 6, dont les unités alkylèneoxydes polymérisées se composent pour 30 à 100 % en poids d'unités propylèneoxyde et pour 0 à 30 % en poids d'unités éthylèneoxyde, les unités éthylèneoxyde éventuellement présentes dans les chaînes polyéther pouvant être disposées en répartition statistique, comme blocs présents à l'intérieur des chaînes et/ou en fin de chaîne.

**7.** Procédé selon la revendication 5 ou 6 caractérisé en ce que la composante b) se compose d'au moins un polyétherpolyol qui présente 5 à 25 % en poids d'unités éthylèneoxyde polymérisées disposées en fin de chaîne par rapport au poids total d'unités alkylèneoxyde polymérisées.

**8.** Procédé selon l'une des revendications 5 à 7 caractérisé en ce que les isomères de diisocyanatodiphénylméthane d'au moins un des composés a1) ou a2) se composent pour 60 à 90 % en poids de 4,4'-diisocyanatodiphénylméthane, 10 à 40 % en poids de 2,4'-diisocyanatodiphénylméthane et 0 à 5 % en poids de 2,2'-diisocyanatodiphénylméthane, le total des pourcentages cités atteignant 100, à condition que la teneur totale des composés a1) et a2) en 2,4'-diisocyanatodiphénylméthanesoit de l'ordre de 10 à 40 % en poids par rapport à la teneur totale en isomères de diisocyanatodiphénylméthane.

**9.** Mise en oeuvre des mélanges de polyisocyanates selon les revendications 1 à 4 comme composante de polyisocyanates lors de la préparation de mousses souples de polyuréthanne.